# DEMANDE DE BREVET EUROPEEN

(11) **EP 0 577 900 A1**
(43) Date de publication de la demande: **12.01.1994**
(21) Numéro de dépôt: 92440084.9
(22) Date de dépôt: 09.07.1992
(51) Int. Cl.: F16H 59/04, B60K 20/04

(54) **Dispositif d'actionnement automatique d'un levier de vitesses**

(71) Demandeur: Société CLEMESSY, F-68100 Mulhouse (FR)
(72) Inventeur: Mahner, Pierre, F-68210 Dannemarie (FR); Onol, Ramazan, F-68500 Guebwiller (FR)
(74) Mandataire: Metz, Paul

(57) **Abrégé**

Dispositif comprenant un bloc (11) porteur, un bras manipulateur (14) muni de moyens d'articulations sur un levier de vitesses (15) et d'actionneurs linéaires commandant les déplacements dudit bras manipulateur selon au moins deux directions croisées, caractérisé en ce que le bloc (11) est maintenu sensiblement à l'aplomb du levier de vitesses (15), et en ce que le bras manipulateur (14) est monté pendulaire sous le bloc porteur (11) et accouplé au levier de vitesses (15), les actionneurs linéaires étant groupés en deux ensembles d'actionneurs sensiblement parallèles et verticaux, dont un premier ensemble commande les pivotements du bras manipulateur (14) autour d'un premier axe, et dont le second commande les pivotements du bras manipulateur (14) autour d'un second axe perpendiculaire au premier.

Cette invention intéresse plus particulièrement les constructeurs d'automobiles.

## Description

La présente invention concerne un dispositif d'actionnement automatique d'un levier de vitesses, notamment pour véhicule automobile.

L'invention se rapporte plus précisément à un tel dispositif d'actionnement automatique agencé en bras d'automate pour la manoeuvre automatique du levier de changement des vitesses d'un véhicule automobile à l'essai, selon un programme de travail préétabli.

Les robots ou automates actuellement utilisés pour essayer des véhicules automobiles sur des bancs de contrôle assurent déjà la fonction de manoeuvre des leviers de changement de vitesses.

Cette fonction est remplie simultanément à d'autres. En effet, trois autres dispositifs de manoeuvre ou d'actionnement automatique agissent conjointement. Un premier fait office de pied de manoeuvre de la pédale d'embrayage-débrayage, un second remplace le pied pour l'actionnement de la pédale de frein, et un troisième assure la manoeuvre de la pédale d'accélérateur, tandis que l'actionnement du levier de vitesses selon des manoeuvres équivalentes à des changements manuels de vitesses est pratiqué par un bras d'automate.

Afin de permettre à ce bras d'actionner le levier de vitesses avec la force nécessaire et selon des mouvements rectilignes croisés, parallèlement à deux directions perpendiculaires l'une à l'autre, entre les positions correspondant aux vitesses enclenchées sur la grille de sélection des vitesses, le bras manipulateur des réalisations connues est un bras articulé en plusieurs endroits à des organes moteurs, tels que des vérins.

Selon une réalisation antérieure, la force de déplacement de la tête du levier de vitesses sur un segment rectiligne correspondant aux mouvements élémentaires de cette tête de levier, entre le point mort et une vitesse, est produite par un premier vérin, dont la tige articulée sur la partie médiane du bras est disposée parallèlement à la direction de ce mouvement élémentaire. Un second vérin est monté dans le prolongement du premier afin de commander la seconde partie du mouvement nécessaire au passage du levier d'une vitesse dans une autre, toujours parallèlement à la direction du premier mouvement élémentaire.

Il en est de même pour déplacer le levier de changement de vitesses selon des mouvements transversaux aux précédents, et donc parallèlement à la seconde direction considérée ci-dessus. Ces mouvements transversaux sont nécessaires pour décrire complètement les trajectoires raccordant les différentes positions du levier de changement de vitesses selon sa grille propre de sélection. Ils résultent de l'action conjointe de deux autres vérins horizontaux s'étendant dans le prolongement l'un de l'autre, selon cette seconde direction.

Ces paires de vérins horizontaux, s'étendant selon des directions perpendiculaires l'une à l'autre, occupent autour du bras une place importante qui doit leur être réservée dans un espace déjà très encombré par des appareillages et mécanismes, organes de liaison et contrôleurs les plus divers, nécessaires aux essais et contrôles effectués simultanément dans le poste de conduite du véhicule automobile.

De plus, l'encombrement de ces automates de contrôles et d'essais connus s'avère souvent trop important pour dégager une place libre suffisante au conducteur humain, nécessaire pour effectuer les déplacements de transit du véhicule automobile.

Par l'invention, on se propose de remédier aux inconvénients précités des automates connus du type présenté ci-dessus.

La solution constituant la base de l'invention consiste donc à proposer un dispositif d'actionnement automatique d'un levier de vitesses, destiné à être aménagé en bras de robot ou bras manipulateur, qui soit d'une grande compacité et qui puisse être installé à l'intérieur du poste de conduite d'un véhicule automobile en dégageant dans ce dernier suffisamment de place pour un conducteur humain.

Un autre objectif de l'invention est de proposer un dispositif d'actionnement automatique du type précité qui soit d'une structure et d'une mise en oeuvre simple et relativement économique, et dont l'encombrement limité permette de le rendre compatible avec les différents appareillages qu'il est nécessaire d'installer dans le poste de conduite d'un véhicule automobile en cours de contrôle ou d'essai.

A cet effet, l'invention a pour objet un dispositif d'actionnement automatique d'un levier de changement de vitesses, notamment pour véhicules automobiles, du type comprenant un corps porteur d'un bras manipulateur muni de moyens d'articulation sur le levier de vitesses et d'actionneurs linéaires commandant les déplacements du bras manipulateur selon au moins deux directions croisées, et se caractérise en ce que le corps est maintenu par des moyens porteurs sensiblement à l'aplomb au-dessus du levier de vitesses, et que le bras manipulateur est monté pendulaire sous le corps porteur auquel il est articulé au niveau de son extrémité supérieure par des moyens d'articulation multidirectionnelle, tandis que son extrémité inférieure présente les moyens d'articulation au levier de vitesses, les actionneurs linéaires étant groupés en deux ensembles d'actionneurs sensiblement parallèles et verticaux, dont un premier ensemble commande les pivotements du bras manipulateur autour d'un premier axe parallèle à l'une des deux dites directions croisées, et dont le second ensemble commande les pivotements du bras manipulateur autour d'un second axe, parallèle à l'autre des deux directions croisées.

Ainsi, par des manoeuvres simultanées, alternées et/ou différentielles des deux ensembles d'actionneurs, qui peuvent être aisément commandées à distance, il est possible de déplacer le bras manipulateur pendulaire dans toutes les directions dans l'espace, autour de sa position neutre verticale, de façon à faire passer le levier de vitesses de l'une à l'autre de toutes les positions de sa grille de vitesses, sans avoir à encombrer l'espace autour du levier de vitesses, du fait que le corps porteur, les moyens d'articulation multidirectionnelle et les actionneurs peuvent être regroupés directement au-dessus du levier de vitesses.

Les moyens d'articulation multidirectionnelle peuvent être réalisés sous la forme d'un plateau du type dit cyclique, c'est-à-dire d'un plateau annulaire dont l'évidement central est délimité par une portion de surface sphérique et annulaire à concavité centrée vers l'intérieur du plateau, et par laquelle le plateau peut osciller dans toutes les directions par glissement de cette surface concave sur une rotule elle-même annulaire présentant un alésage central cylindrique lui permettant d'être montée coulissante, en cas de besoin, axialement le long d'un cylindre de guidage. Ce dernier ainsi que l'extrémité des actionneurs, peuvent être solidaires du corps porteur, tandis que les autres extrémités des actionneurs sollicitent le plateau cyclique, sous lequel fait saillie le bras manipulateur solidaire de la face inférieure du plateau cyclique.

Cependant, dans une forme de réalisation avantageusement simple et économique, les moyens d'articulation multidirectionnelle comprennent une articulation pendulaire à deux axes croisés, perpendiculaires l'un à l'autre.

Dans ce mode de réalisation, afin d'obtenir une bonne compacité combinée à une simplicité mécanique de réalisation, il est avantageux que l'articulation pendulaire comprenne un balancier, monté tourillonnant autour du premier axe sur une cage, elle-même montée tourillonnante autour du second axe, perpendiculaire au premier, sur l'ossature. Le premier ensemble d'actionneurs comprend avantageusement un couple d'actionneurs parallèles l'un à l'autre, fonctionnant en opposition, et articulés sur le balancier ou sur la cage, de part et d'autre respectivement du premier axe ou du second axe. L'autre ensemble d'actionneurs peut également comprendre un couple d'actionneurs parallèles l'un à l'autre, fonctionnant en opposition et articulés sur la cage ou sur le balancier, de part et d'autre respectivement du second axe ou du premier axe, mais il peut être suffisant que cet autre ensemble d'actionneurs comprenne un unique actionneur, sensiblement parallèle aux actionneurs du premier ensemble, et articulé sur la cage ou le balancier, du côté respectivement du second axe ou du premier axe.

Afin d'améliorer encore la compacité du dispositif, il est avantageux que le corps porteur comprenne un bloc tubulaire d'axe sensiblement vertical, dans lequel sont logés les actionneurs de manoeuvres commandant le basculement du levier d'actionnement pendulaire, et dans la base ouverte duquel est rapportée l'articulation pendulaire.

En outre, afin de faciliter la commande des actionneurs tout en permettant à ces derniers de manoeuvrer avec une force suffisante le levier de vitesses, les actionneurs linéaires sont avantageusement des vérins linéaires à double effet et à fluide de manoeuvre, dont le cylindre de chacun est articulé autour d'un point fixe sur l'ossature, et dont l'extrémité de la tige de chacun est articulée par une rotule sur l'articulation pendulaire à deux axes croisés.

L'invention a également pour objet un robot de contrôle et d'essais pour véhicules automobiles, du type comprenant un bras manipulateur pour manoeuvrer le levier de vitesses du véhicule selon lequel le bras manipulateur comporte un dispositif d'actionnement automatique propre à l'invention, tel que présenté ci-dessus.

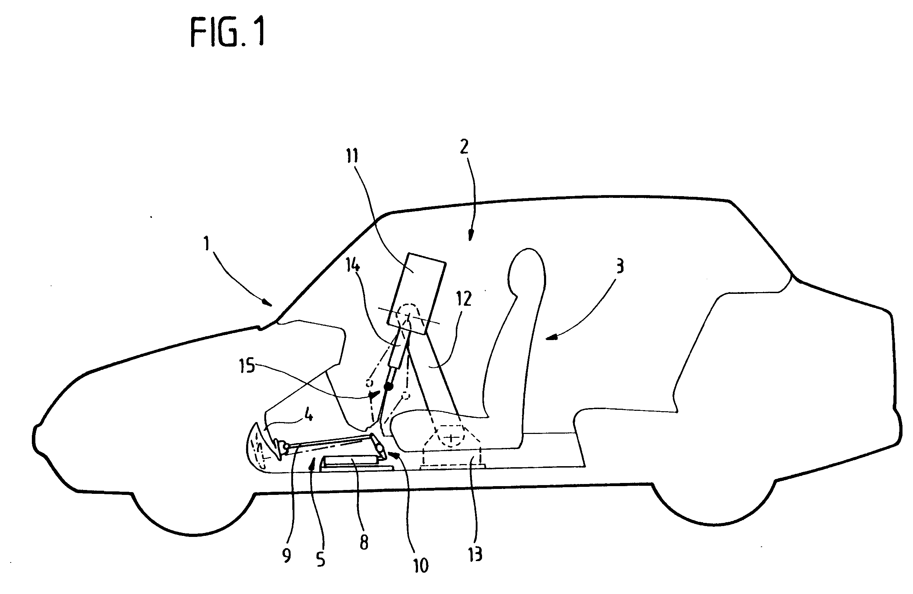

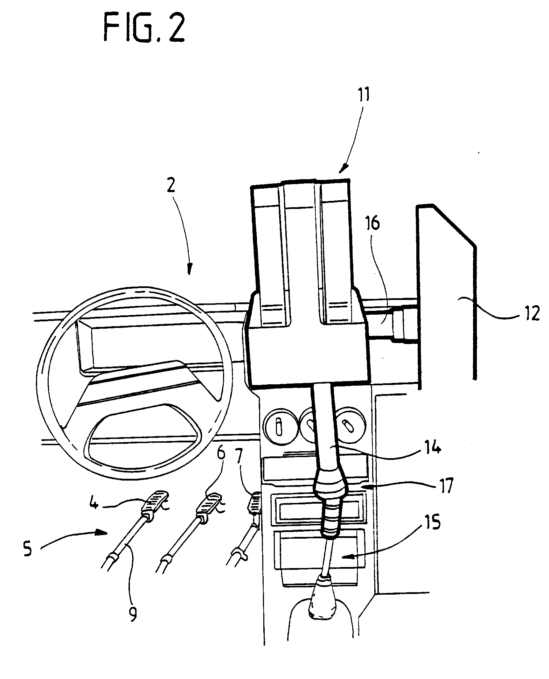

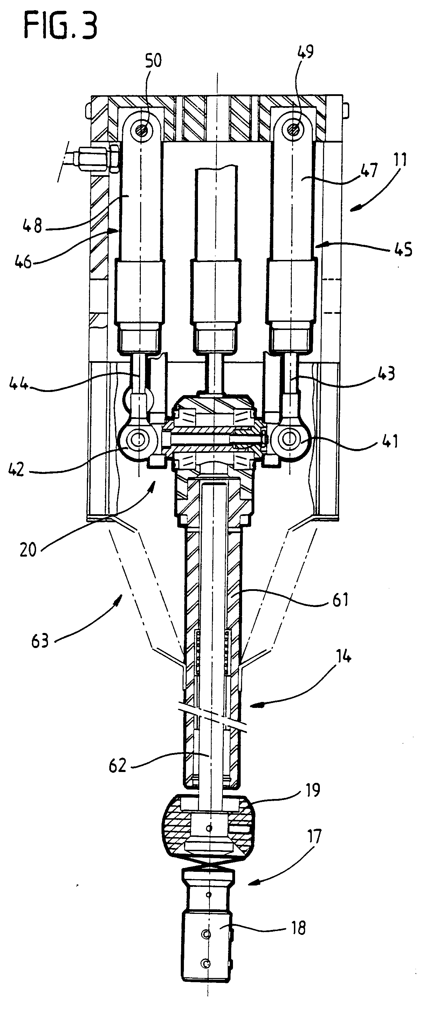

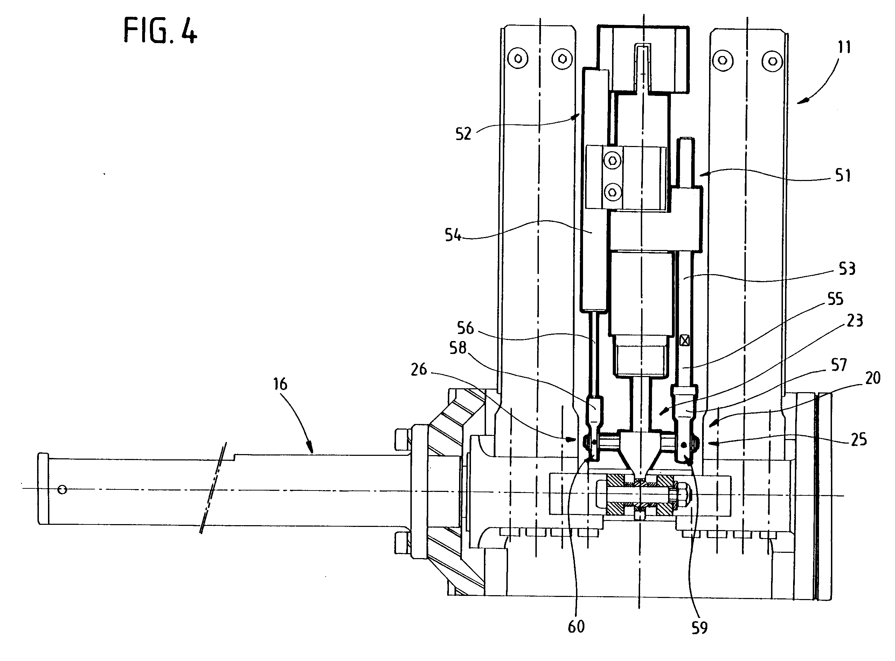

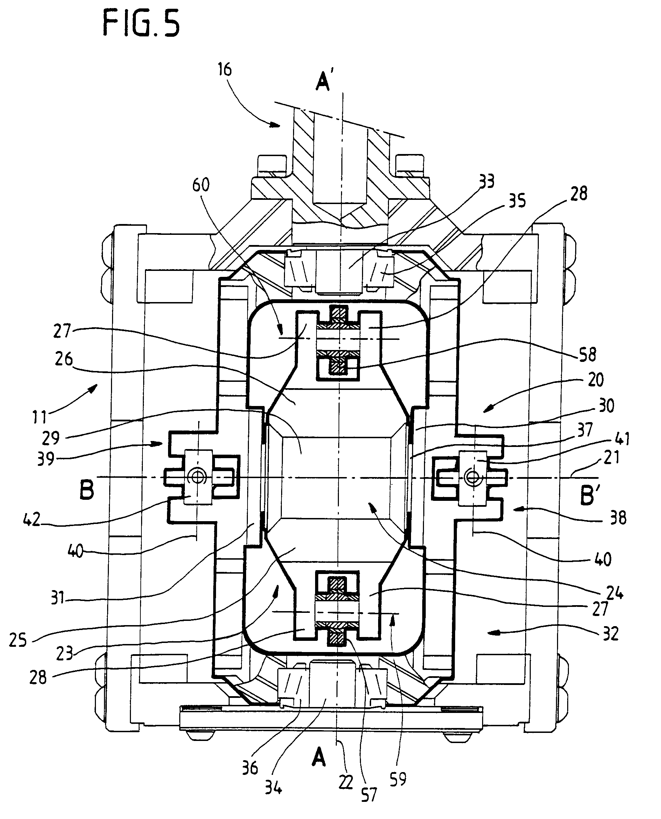

L'invention sera mieux comprise, et d'autres avantages et caractéristiques de l'invention ressortiront à la lecture de la description donnée ci-dessous à titre nullement limitatif, d'un exemple préféré de réalisation décrit en référence aux dessins annexés sur lesquels :
. la figure 1 est une vue de profil simplifiée du robot d'essai en place dans une voiture,
. la figure 2 est une vue en perspective simplifiée du robot d'essai en place, vu de l'arrière, à l'intérieur d'un poste de conduite,
. la figure 3 représente une vue générale en coupe longitudinale par un plan vertical, représentant le dispositif selon l'invention agencé en bras pendulaire d'un robot d'essais,
. la figure 4 est une vue de détail en coupe longitudinale, par un plan vertical perpendiculaire au plan de la figure 3 et représentant plus particulièrement l'articulation à deux axes croisés commandant les mouvements pendulaires du bras,
. la figure 5 est une vue partiellement en plan et partiellement en coupe horizontale du dispositif des figures 3 et 4, représentant plus particulièrement l'articulation multidirectionnelle à deux axes croisés du bras manipulateur.

Le robot manipulateur selon l'invention est placé dans un véhicule automobile 1 en contrôle ou en essai présentant un poste de conduite 2, un siège avant 3, des pédales de commande dont une pédale d'embrayage 4 actionnée par un dispositif automatique de manoeuvre 5, une pédale de frein 6 et une pédale d'accélérateur 7. Ce dispositif de manoeuvre 5 présente les principaux éléments suivants. Un vérin 8 agit sur une tige de poussée 9 par l'intermédiaire d'un basculeur 10.

Le robot manipulateur selon l'invention comprend un corps porteur sous la forme d'un bloc-carter métallique 11 monté sur un support orientable 12 prenant appui sur le châssis 13 du véhicule automobile à contrôler ou en essai.

De ce bloc 11 émerge vers le bas un bras manipulateur 14 monté perpendiculaire et accouplé à un levier de vitesses 15 appelé à occuper diverses positions selon sa propre grille de sélection des vitesses (figures 1 et 2).

Le bloc 11 est relié mécaniquement au reste du corps de l'automate d'essai duquel il dépend et au support orientable 12 par une potence transversale de liaison 16. Il est amené et immobilisé juste au-dessus du levier de vitesses 15 dans une position dans laquelle son axe longitudinal XX' et celui du bras manipulateur 14 au repos sont sensiblement alignés, lorsque le levier de vitesses se trouve en position neutre, c'est à dire au point mort sur la grille de sélection des vitesses.

Pour faciliter la description, on suppose que le levier de vitesses 15 est du type dit " levier au plancher", dont l'axe longitudinal est sensiblement vertical lorsqu'il est en position neutre.

Le bloc 11 est alors maintenu à l'aplomb au-dessus du levier de vitesses 15, de sorte que son axe longitudinal XX' soit sensiblement vertical alors que le bras manipulateur 14 fait saillie sous le bloc 11, à la base duquel il est lié par son extrémité supérieure, tandis qu'il est accouplé à son extrémité inférieure au levier de vitesses 15 par une articulation 17, par exemple à cardan, montée entre une douille de jonction 18 venant s'emmancher et se fixer sur le levier de vitesses 15 et une pièce d'extrémité 19, par exemple de profil semi-sphérique autorisant un débattement angulaire adapté par rapport à la position médiane du levier de vitesse correspondant en général au point mort.

On sait que le levier de vitesses 15 doit classiquement être déplacé selon deux directions croisées, dont l'une est une direction longitudinale sensiblement parallèle à l'axe longitudinal du véhicule et l'autre une direction horizontale et transversale sensiblement perpendiculaire à la direction longitudinale.

La liaison de l'extrémité supérieure du bras manipulateur 14 au bloc 11 est assurée par une articulation multidirectionnelle 20, du type pendulaire à deux axes croisés 21 et 22, perpendiculaires l'un à l'autre. Cette articulation multidirectionnelle 20 comprend un balancier 23 pourvu d'un pivot tubulaire 24, central et transversal, disposé entre deux bras latéraux symétriques 25 et 26, dont chacun présente une chape d'extrémité 27 et 28 ouverte du côté opposé au pivot 24 et à deux branches parallèles entre elles et perpendiculaires à l'axe du pivot 24. A sa partie inférieure, sous le pivot 24, le balancier 23 présente une embase tubulaire 29, dans laquelle est retenue l'extrémité supérieure du levier de vitesses 15.

Le balancier 23 est monté à pivotement par son pivot tubulaire 24 par deux roulements à billes 30 et 31 retenus coaxialement dans une cage pendulaire 32, logée à l'intérieur de la base du bloc 11, qui est elle-même montée à pivotement dans celui-ci par deux roulements à billes 33 et 34 entourant chacun un tourillon 35 et 36 disposés coaxiaux, en saillie l'un vers l'autre et à l'intérieur du bloc 11, sur les faces internes de deux côtés opposés de ce bloc.

La cage pendulaire 32 présente une section transversale sensiblement rectangulaire, et les deux roulements à billes 33 et 34 sont retenus chacun au milieu de l'un de ses deux petits côtés, de sorte que leur axe commun AA', qui est l'axe de pivotement de la cage pendulaire dans le bloc 11, soit perpendiculaire à l'axe commun BB' des deux roulements à billes 30 et 31 assurant le pivotement du balancier 23 dans la cage pendulaire 32, et retenus chacun au milieu de l'un des deux grands côtés de cette cage pendulaire, autour d'un arbre 37 transversal à cette cage. Sur la face opposée au roulement 30 ou 31 correspondant, chaque grand côté de la cage pendulaire 32 présente une chape 38 et 39 en saillie radiale vers l'extérieur de la cage pendulaire 32 selon deux branches parallèles au plan passant par l'axe BB' et par l'axe longitudinal du bloc 11.

Dans chacune des deux chapes 38 et 39 est retenue et centrée autour d'un axe transversal 40 une rotule 41 et 42 d'un embout à rotule monté sur l'extrémité inférieure de chaque tige 43 et 44 de deux vérins 45 et 46, parallèles et sensiblement verticaux, s'étendant dans le bloc 11, dans lequel ils sont retenus et articulés par l'extrémité supérieure de leur cylindre 47 et 48 autour d'un axe de pivotement respectif 49 et 50 fixe dans le bloc 11.

De manière analogue, deux autres vérins 51 et 52 sont logés dans le bloc 11, parallèlement à son axe longitudinal, et retenus par l'extrémité supérieure de leur cylindre 53 et 54, par exemple autour d'un axe de pivotement fixe dans le bloc 11, tandis que l'extrémité inférieure de leur tige 55 et 56 est équipée d'un embout à rotule 57 et 58 retenue et centrée autour de l'axe transversal 59 et 60 de chacune des chapes d'extrémité 27 et 28 du balancier 23.

Les vérins 45, 46 et 51, 52 constituent deux couples d'actionneurs linéaires à fluide de manoeuvre, par exemple des vérins hydrauliques à double effet, alimentés en fluide hydraulique par des conduites traversant des parois du bloc 11 à partir d'un circuit hydraulique classique comprenant un réservoir et une pompe, par l'intermédiaire d'électrovalves ou de servovalves dont l'étage électrique de pilotage reçoit des ordres électriques d'un programmateur de cycle de fonctionnement, et commande l'étage hydraulique de puissance pour délivrer de manière correspondante du fluide hydraulique sous pression vers l'un au moins des vérins et permettre le retour du fluide hydraulique d'au moins un autre vérin vers le réservoir, afin de provoquer les déplacements coordonnés des tiges de chaque couple de vérins.

Les deux vérins de chacun des deux couples de vérins sont alimentés et commandés en mouvements conjugués en opposition, c'est-à-dire que si la tige de l'un des deux vérins est sortie de son cylindre, la tige de l'autre des deux vérins est rentrée dans son cylindre sur la même course, et inversement. Ainsi, les vérins 45 et 46, articulés sur la cage pendulaire 32 de part et d'autre de son axe de rotation AA' sur le bloc 11, commandent un mouvement de balancier de cette cage pendulaire dans le bloc 11, autour de l'axe AA', et les vérins 51 et 52, articulés sur le balancier 23 de part et d'autre de son axe BB' de pivotement sur la cage pendulaire 32, commandent un mouvement de basculement du balancier 23 par rapport à la cage 32, autour de l'axe BB' qui est perpendiculaire à l'axe AA'.

Le bras manipulateur 14 qui est solidaire du balancier 23, est ainsi animé de mouvements pendulaires permis par l'articulation multidirectionnelle 20 à deux axes de pivotement croisés AA' et BB', et commandés par les deux couples de vérins. L'enveloppe géométrique des mouvements du bras 14 est représentée par le cône visible sur la figure 3, le bras manipulateur 14 pouvant être déplacé dans toutes les directions à l'intérieur de ce cône par l'effet de commande synchronisée ou différentielle sur les deux couples de vérins, parallèlement les uns aux autres à l'intérieur du bloc 11. Si, de plus, la potence transversale 16 de soutien du bloc 11 permet de placer ce dernier de sorte que chacun des deux axes AA' et BB' de l'articulation multidirectionnelle pendulaire 20 soit parallèle à l'une des deux directions croisées selon lesquelles le levier de vitesses 15 doit être déplacé, on comprend que des fonctionnements successifs en séquences des deux couples de vérins permettent de déplacer le levier de vitesses 15 selon sa grille de sélection des vitesses.

Il faut noter que si les vérins hydrauliques utilisés sont du type à double effet, un seul vérin peut être suffisant pour basculer la cage pendulaire 32 ou le balancier 23 autour de leur axe respectif AA' ou BB'.

Par contre, si les vérins sont à simple effet, alors il faut impérativement au moins deux vérins antagonistes par ensemble de vérins pour basculer la cage pendulaire 32 ou le balancier 23 autour de leur axe respectif.

En outre, les deux axes croisés AA' et BB' de l'articulation multidirectionnelle pendulaire 20 ne sont pas forcément dans un même plan.

De plus, comme représenté sur la figure 3, le bras manipulateur 14 peut être de longueur réglable, par exemple constitué de deux tronçons télescopiques, pour faciliter son raccordement au levier de vitesse 15. Le bras manipulateur 14 comprend ainsi une partie tubulaire 61, solidarisée par son extrémité supérieure dans l'embase tubulaire 29 du balancier 23, et ouverte à son extrémité inférieure pour recevoir une tige centrale 62, montée télescopique et réglable longitudinalement par rapport à la partie tubulaire 61. Cette tige centrale 62 porte à son extrémité inférieure la sphère 19 d'accouplement à la tête du levier de vitesses 15.

Enfin, un soufflet souple 63 en caoutchouc ou en un matériau analogue, est monté entre la base du bloc 11 et le pourtour de la partie tubulaire 61 du bras manipulateur 14, pour le protéger et empêcher l'entrée de salissures dans le bloc, et en particulier dans l'articulation multidirectionnelle pendulaire 20, sans gêner cependant les mouvements des bras, du fait de sa grande latitude de déformation.

Il est bien entendu qu'au-delà des moyens décrits, diverses modifications évidentes et variantes simples entrent dans le cadre de la présente invention.

## Revendications

1. Dispositif d'actionnement automatique (1) d'un levier (15) de changement de vitesses, notamment pour véhicule automobile, comprenant un bloc (11) porteur, un bras manipulateur (14) muni de moyens d'articulations sur le levier de vitesses (15) et d'actionneurs linéaires commandant les déplacements du bras manipulateur selon au moins deux directions croisées, caractérisé en ce que le bloc (11) est maintenu sensiblement à l'aplomb du levier de vitesses (15), et en ce que le bras manipulateur (14) est monté articulé sur le bloc porteur (11) au niveau de son extrémité supérieure par une articulation multidirectionnelle tandis que son extrémité inférieure présente des moyens d'accouplement au levier de vitesses (15), les actionneurs linéaires étant groupés en deux ensembles d'actionneurs sensiblement parallèles et verticaux, dont un premier ensemble commande les pivotements du bras manipulateur (14) autour d'un premier axe AA' parallèle à l'une des deux directions croisées, et dont le second ensemble commande les pivotements du bras manipulateur (14) autour d'un second axe BB' parallèle à l'autre des deux directions croisées.

2. Dispositif selon la revendication 1, caractérisé en ce que les moyens d'articulation multidirectionnelle comprennent une articulation pendulaire (20) à deux axes croisés AA' BB', perpendiculaires l'un à l'autre.

3. Dispositif selon la revendication 2, caractérisé en ce que l'articulation pendulaire (20) comprend un balancier (23) dont est solidaire le bras manipulateur (14) qui est monté à pivotement autour du premier axe BB' sur une cage pendulaire (32) montée elle-même pivotante autour du second axe AA', perpendiculaire au premier, sur le bloc (11).

4. Dispositif selon la revendication 3, caractérisé en ce qu'un premier ensemble d'actionneurs comprend un couple d'actionneurs fonctionnant en opposition et articulés sur le balancier (23) ou la cage pendulaire (32), de part et d'autre du premier axe BB' ou du second axe AA'.

5. Dispositif selon la revendication 4, caractérisé en ce que l'autre ensemble d'actionneurs comprend également un couple d'actionneurs fonctionnant en opposition et articulés sur la cage pendulaire (32) ou le balancier (23) de part et d'autre du second axe AA' ou du premier axe BB'.

6. Dispositif selon la revendication 3, caractérisé en ce qu'au moins un ensemble d'actionneurs comprend au moins un actionneur parallèle aux actionneurs de l'autre ensemble et articulés sur la cage pendulaire (32) ou le balancier (23) d'un côté du second axe AA' ou du premier axe BB' respectivement.

7. Dispositif selon l'une quelconque des revendications de 3 à 6, caractérisé en ce que le bloc (11) comprend un corps tubulaire d'axe longitudinal sensiblement vertical XX' et dans lequel sont logés les actionneurs de manoeuvre commandant les basculements du bras manipulateur (14), et dans la base ouverte duquel est rapportée l'articulation multidirectionnelle (20).

8. Dispositif selon l'une quelconque des revendications de 2 à 7, caractérisé en ce que les actionneurs linéaires sont des vérins linéaires à double effet et à fluide de manoeuvre, dont le cylindre de chacun est articulé autour d'un point fixe ou d'un axe fixe sur le bloc (11), et dont l'extrémité de chaque tige est articulée par une rotule sur l'articulation multidirectionnelle pendulaire (20) à deux axes croisés.

9. Dispositif selon l'une quelconque des revendications de 1 à 8, caractérisé en ce que le bras manipulateur (14) est équipé à son extrémité inférieure d'une articulation (17) montée entre une douille de jonction (18) et fixée sur le levier de vitesses et une pièce d'extrémité (19).

10. Dispositif selon l'une quelconque des revendications précédentes, caractérisé en ce que le bras manipulateur est téléscopique.
